# EUROPÄISCHE PATENTSCHRIFT

(11) **EP 2 625 047 B1**
(45) Veröffentlichungstag und Bekanntmachung des Hinweises auf die Patenterteilung: **10.09.2014**
(21) Anmeldenummer: 11731305.6
(22) Anmeldetag: 04.07.2011
(51) Int. Cl.: B60B 27/00, B60B 27/02, B60B 37/10, F16C 41/04, F16C 19/54

(54) **RADLAGEREINHEIT**
WHEEL BEARING UNIT
ENSEMBLE DE ROULEMENT DE ROUE

(30) Priorität: 08.10.2010 DE 102010047932
(43) Veröffentlichungstag der Anmeldung: 14.08.2013
(73) Patentinhaber: Schaeffler Technologies GmbH & Co. KG, 91074 Herzogenaurach (DE)
(72) Erfinder: HORN, Christian, 97708 Bad Bocklet (DE); HEUBERGER, Robert, 97422 Schweinfurt (DE)
(86) Internationale Anmeldenummer: PCT/EP2011/061204
(87) Internationale Veröffentlichungsnummer: WO 2012/045490

(56) Entgegenhaltungen:
- DE-A1-102007 057 226
- JP-U- 57 051 822
- US-A- 5 757 084
- US-A- 6 149 244
- US-B1- 6 457 869

## Beschreibung

### Gebiet der Erfindung

Die Erfindung betrifft eine Radlagereinheit insbesondere für Nutzfahrzeuge mit einer auf einem Lagerzapfen verdrehbar mittels zwei axial voneinander beabstandeter Kegelrollenlager mit jeweils einem Außenring, einem Innenring und einem zwischen diesen angeordneten, aus Kegelrollen und einem Lagerkäfig für diese gebildeten Rollenkranz gelagerten Radnabe, wobei die Kegelrollenlager gegeneinander gerichtet mittels ihrer Außenringen an jeweils einem Axialanschlag der Radnabe aufgenommen sind und die Innenringe der Kegelrollenlager axial voneinander mittels einer Hülse beabstandet sind.

### Hintergrund der Erfindung

Eine gattungsgemäße Radlagereinheit für die Anwendung in einem Nutzfahrzeug ist beispielsweise aus den Dokumenten US 5,757,084 und US 6,149,244 bekannt. Hierbei ist eine ein Rad tragende Radnabe verdrehbar auf einem Lagerzapfen aufgenommen. Hierzu dienen zwei axial beabstandet zueinander an der Radnabe aufgenommene Kegelrollenlager. Die Neigungsachsen der Kegelrollen sind dabei gegeneinander geneigt und die Außenringe sind gegeneinander an entsprechenden Axialanschlägen axial gegeneinander positioniert. Im eingebauten Zustand der Radlagereinheit sind die axialen voneinander wegweisenden Stirnseiten der Innenringe jeweils axial am Lagerzapfen beziehungsweise der auf diesen aufgeschraubten Kontermutter axial fixiert. Die einander zugewandten Stirnflächen sind mittels einer zwischen diesen angeordneten Hülse axial positioniert.

Im nicht verbauten Zustand sind die Innenringe und die Rollenkränze nur begrenzt verliergesichert und lagefixiert. Insbesondere ist durch ein teilweise groβes Axialspiel die Hülse nicht zwischen den Innenringen gehalten und kann daher radial verlagert werden und damit eine Montage der Radlagereinheit auf dem Lagerzapfen erschweren.
Aus der JP 57 051822 U ist ein im Betriebszustand mittels eines Seegerings axial gesichertes Kegelrollenlager bekannt.

### Aufgabe der Erfindung

Aufgabe der Erfindung ist daher die vorteilhafte Weiterbildung einer Radlagereinheit insbesondere vor dem Hintergrund einer einfachen Herstellung und Montage dieser auf dem Lagerzapfen.

### Allgemeine Beschreibung der Erfindung

Die Aufgabe wird durch den Gegenstand des Anspruchs 1 gelöst. Die von diesem abhängigen Ansprüche geben vorteilhafte Ausführungsbeispiele des Gegenstands des Anspruchs 1 wieder.
Die vorgeschlagene Radlagereinheit insbesondere für Nutzfahrzeuge umfasst eine auf einem Lagerzapfen verdrehbar mittels zwei axial voneinander beabstandeter Kegelrollenlager mit jeweils einem Außenring, einem Innenring und einem zwischen diesen angeordneten, aus Kegelrollen und einem Lagerkäfig für diese gebildeten Rollenkranz gelagerte Radnabe, wobei die Kegelrollenlager gegeneinander gerichtet mittels ihrer Außenringe an jeweils einem Axialanschlag der Radnabe aufgenommen sind, die Innenringe der Kegelrollenlager axial voneinander mittels einer Hülse beabstandet sind, im nicht eingebauten Zustand der Radlagereinheit Radnabe, Kegelrollenlagern und Hülse eine selbsthaltende Baueinheit bilden und beide Kegelrollenlager mittels jeweils eines direkt an der Radnabe aufgenommenen, den Rollenkranz zumindest teilweise radial überdeckenden Sicherungsmittels axial gesichert sind.

Durch zwei jeweils an den einander abgewandten Seiten der Kegelrollenlager angeordnete Sicherungsmittel kann während des Zeitraums bis zur Montage der Baueinheit auf dem Lagerzapfen eine einfache Selbsthaltung der Kegelrollenlager und der Hülse erzielt werden. Hierzu wird insbesondere ein Spiel zwischen dem Rollenkranz beziehungsweise den Innenringen der Kegelrollenlager und den Sicherungsmitteln gering gehalten, um die axiale Verlagerung dieser im nicht eingebauten Zustand zu begrenzen. Ein Kontakt oder gar eine Vorspannung der Sicherungsmittel gegenüber dem Rollenkranz beziehungsweise dem Innenring wird zumindest im eingebauten Zustand der Radlagereinheit vermieden, um Reibungsverschleiß zwischen den mit einer Differenzdrehzahl belasteten Sicherungsmitteln und Bauteilen des Kegelrollenlagers zu vermeiden. Dabei kann vorgesehen sein, das Sicherungsmittel im nicht eingebauten Zustand gegenüber dem Rollenkranz oder den Innenring zu verspannen und bei der Montage ein Spiel zwischen dem Sicherungsmittel und dem Kegelrollenlager auszubilden. Hierzu kann beispielsweise ein als Tellerfeder ausgebildetes Sicherungsmittel vorgesehen sein, das zwischen Axialanschlag und dem Innenring oder Rollenkranz axial verspannt ist und deren Vorspannung mittels einer auf den Lagerzapfen zur Sicherung der Radlagereinheit aufgeschraubten Mutter aufgehoben wird, indem diese zwischen Innenring und Mutter verspannt und von dem Axialanschlag abhebt.

Gemäß der Erfindung wird zumindest eines der beiden Sicherungsmittel aus einem in einer Radialnut der Radnabe angeordneten Sicherungsring gebildet. Hierbei ist der Sicherungsring radial nach innen soweit erstreckt, dass er den Rollenkranz radial übergreift und einen Axialanschlag für den Innenring bildet. Der Sicherungsring wird dabei vorzugsweise mit geringem Spiel zum Innenring versehen, um im eingebauten Zustand Reibung zu vermeiden.

Alternativ zu einer Selbsthaltung des Innenrings durch den Sicherungsring kann dieser einen Axialanschlag für den Rollenkranz bilden, wobei der Innenring mittels eines Ringbords gegenüber dem Rollenkranz axial in Richtung des Sicherungsrings gesichert ist. Hierbei wird bevorzugt der Lagerkäfig des Rollenkranzes axial lagegesichert, wobei auch hier ein Minimalspiel des Sicherungsrings zum Lagerkäfig eingehalten werden kann.

Gemäß der Erfindung ist vorgesehen, den Sicherungsring als Wellring mit einem über den Umfang ausgebildeten Radialprofil auszubilden. Dieser weist ein in Umfangsrichtung ausgebildetes Außen- und Innenprofil auf, wobei das Außenprofil in die Radialnut eingreift und mittels dessen Innenprofils der Rollenkranz axial gesichert ist.

Alternativ kann zumindest eines der Kegelrollenlager mittels eines Sicherungsrings lagefixiert sein, der im Wesentlichen U-förmig mit zwei mittels einer Spange verbundenen Schenkeln ausgebildet ist. Hierbei greifen bevorzugt dessen freie Enden der Schenkel und Ecken zwischen Schenkel und Spange radial in die Radialnut ein, wobei der Rollenkranz mittels der Schenkel im nicht eingebauten Zustand der Radlagereinheit axial gesichert wie lagefixiert ist. Insbesondere zur Erweiterung der Anlagefläche des Sicherungsrings gegenüber dem Rollenkranz, bevorzugt dem Lagerkäfig des Rollenkranzes ist zwischen dem Sicherungsring und dem Kegelrollenlager eine im Wesentlichen U-förmig ausgenommene Unterlegscheibe angeordnet. Durch den Ausschnitt in der Unterlegscheibe kann die auf den Lagerzapfen zur axialen Fixierung der Radlagereinheit aufgeschraubte Mutter wie Zentralmutter ohne Entfernen der Unterlegscheibe mit dem Innenring des außen liegenden Kegelrollenlagers verspannt werden.

Alternativ zu einem Sicherungsring zur Selbsthaltung der Kegelrollenlager kann an zumindest einer einem Kegelrollenlager zugewandten Seite das Sicherungsmittel aus einer zwischen der Radnabe und dem Innenring angeordneten, einen Axialanschlag für den Rollenkranz bildenden Dichtung gebildet und der Innenring mittels eines Ringbords gegenüber dem Rollenkranz axial in Richtung des Sicherungsrings gesichert sein.

### Kurze Beschreibung der Figuren

Die Erfindung wird anhand der in den Figuren 1 bis 8 dargestellten Ausführungsbeispiele näher erläutert. Dabei zeigen:
- Figur 1: einen Teilschnitt durch eine erfindungsgemäße Radlagereinheit mit zwei unterschiedlichen Sicherungsmitteln für jedes Kegelrollenlager,
- Figur 2: ein Kegelrollenlager im Teilschnitt mit einem entsprechend Figur 1 den Rollenkranz vollständig radial übergreifenden Sicherungsring,
- Figur 3: einen Teilschnitt eines Kegelrollenlagers mit einem gegenüber Figur 2 geänderten, den Rollenkranz lediglich teilweise übergreifenden Sicherungsring,
- Figur 4: einen Teilschnitt durch ein Kegelrollenlager mit einem als Dichtung ausgebildeten, zwischen Radnabe und Innenring angeordneten Sicherungsmittel,
- Figur 5: eine Aufsicht auf ein Kegelrollenlager mit einem als Wellring ausgebildeten Sicherungsmittel,
- Figur 6: eine Aufsicht auf ein Kegelrollenlager mit einem als U-förmig ausgebildeten Sicherungsring,
- Figur 7: eine schematische Ansicht einer Unterlegscheibe für den Sicherungsring der Figur 6
und
- Figur 8: einen Teilschnitt durch ein Kegelrollenlager mit einem als Federelement ausgebildeten, axial zwischen der Radnabe und dem Innenring verspannten Sicherungsmittel.

### Ausführliche Beschreibung der Figuren

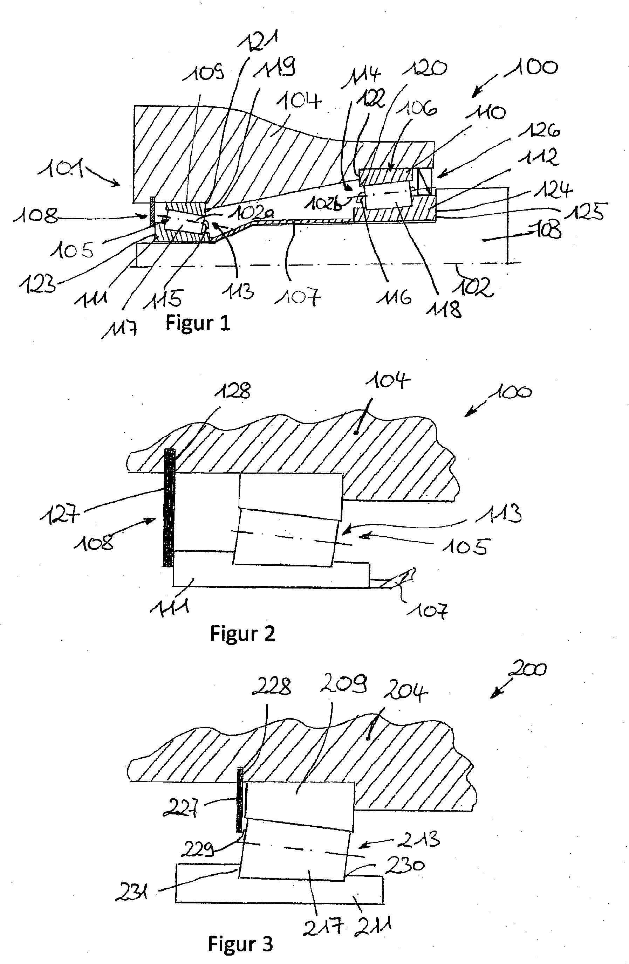

Figur 1 zeigt die Radlagereinheit 100 in schematischer Darstellung im Teilschnitt, wobei lediglich der obere Teil der um die Drehachse 102 angeordneten Radlagereinheit 100 dargestellt ist. Die Radlagereinheit 100 bildet im vom Lagerzapfen 103 abgenommenen Zustand die Baueinheit 101, die aus der ein Rad aufnehmenden Radnabe 104, den beiden axial beabstandeten und auf unterschiedlichen Durchmessern an dieser axial zueinander beabstandeten Kegelrollenlager 105, 106 und der zwischen diesen angeordneten Hülse 107 gebildet ist.

Die Kegelrollenlager 105, 106 weisen jeweils einen an der Radnabe 104 aufgenommenen Außenring 109, 110, einen zur Aufnahme der Radlagereinheit 100 am Lagerzapfen 103 vorgesehenen Innenring 111, 112 sowie Rollenkränze 113, 114 bestehend aus den in dem Lagerkäfig 115, 116 über den Umfang verteilt aufgenommenen Kegelrollen 117, 118 auf.

Die Drehachsen 102a, 102b der Kegelrollen 117, 118 sind jeweils einander zugewandt gegenüber der Drehachse 102 geneigt, so dass die Radnabe 104 radial und axial gegenüber dem Lagerzapfen 103 gelagert ist. Die Kegelrollenlager 105, 106 sind mittels der Außenringe 109, 110 an ihren gegenüberliegenden Stirnseiten 119, 120 an Axialanschlägen 121, 122 angelegt.

Im eingebauten Zustand der Baueinheit 101 werden die einander gegenüberliegenden Stirnseiten 123, 124 der Innenringe 111, 112 einerseits mittels einer nicht dargestellten, an der Endseite des Lagerzapfens 103 aufgeschraubten Zentralmutter und andererseits dem Axialanschlag 125 verspannt, wobei die Hülse 107 die Innenringe 111, 112 beabstandet.

Im abgenommenen Zustand der Baueinheit 101 sind die Innenringe 111, 112 nicht gegeneinander axial vorgespannt, so dass diese infolge der geneigten Drehachsen 102a, 102b der Kegelrollen 117, 118 nicht an sich verliersicher ausgebildet sind. Zur Herstellung der Lagerfixierung der Innenringe 111, 112 und damit der Rollenkränze 113, 114 im abgenommenen Zustand der Radlagereinheit 100 in Form der Baueinheit 101 ist an den Außenseiten der Radlagereinheit 100 jeweils ein axiales Sicherungsmittel 108, 126 vorgesehen, das jeweils einen Innenring 111, 112 axial lagefixiert. Im Einzelnen sind in den nachfolgenden Figuren vorteilhafte Ausführungsbeispiele der Sicherungsmittel 108, 126 im Detail dargestellt.

Figur 2 zeigt ein Detail der Radlagereinheit 100 der Figur 1 mit dem Kegelrollenlager 105. Das Sicherungsmittel 108 ist hierbei als Sicherungsring 127 ausgebildet, der in die Radialnut 128 der Radnabe 104 eingehängt ist und radial den Rollenkranz 113 übergreift und den Innenring 111 axial beaufschlagt. Hierbei kann ein Kontakt zum Innenring 111 ausgebildet sein, der das axiale Spiel des Innenrings 111 so begrenzt, dass die Hülse 107 zwischen den Innenringen 111 und 112 (Figur 1) zentriert bleibt. Hierbei wird eine Reibung des Sicherungsrings 127 gegenüber dem Innenring 111 gering gehalten, um im eingebauten Zustand Verschleiß und Reibmomente zwischen dem mit der Radnabe 104 drehenden Sicherungsring 127 und dem feststehenden Innenring 111 zu vermeiden. Alternativ kann zwischen dem Sicherungsring 127 und dem Innenring 111 ein geringer Axialspalt vorgesehen sein.

Figur 3 zeigt eine Variante des in der Figur 2 gezeigten Sicherungsrings 127 in Form des in der in kurzem Abstand zu dem Außenring 209 in der Radnabe 204 eingebrachten Radialnut 228 aufgenommenen Sicherungsrings 227 der Radlagereinheit 200. Der Sicherungsring 227 übergreift lediglich den Rollenkranz 213 teilweise radial und sichert diesen vor einer axialen Verlagerung. Hierbei ist zur Verhinderung von Reibung und Verschleiß zwischen dem Rollenkranz 213 und dem Sicherungsring 227 ein Axialspalt 229 eingestellt. Infolge der an dem Innenring 211 vorgesehenen Ringborde 230, 231 ist der Innenring 211 im Wesentlichen axial spielfrei gegenüber den Kegelrollen 217 gelagert, so dass der Innenring durch den Ringbord 231 an einem axiale Ausweichen bei axial fixiertem Rollenkranz 213 gehindert wird. Die axiale Fixierung des Rollenkranzes 213 durch den Sicherungsring 227 kann an den Kegelrollen 217 oder an dem nicht dargestellten Lagerkäfig erfolgen.

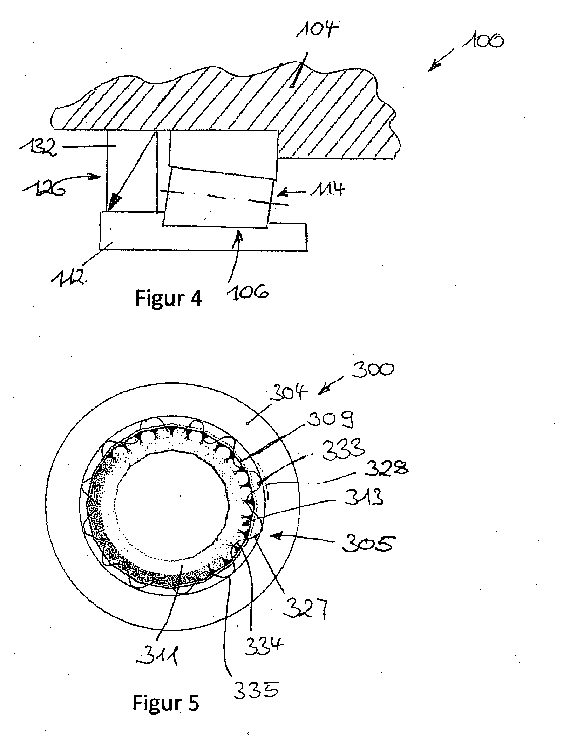

Figur 4 zeigt ein Detail der Radlagereinheit 100 mit dem dem freien Ende des Lagerzapfens abgewandten Kegelrollenlager 106, dessen axiales Sicherungsmittel 126 als Dichtung 132 ausgebildet ist. Die Dichtung 132 ist zwischen der Radnabe 104 und dem Innenring 112 eingebracht und verhindert durch ihre Reibung eine axiale Verlagerung des Innenrings gegenüber der Radnabe 104, wodurch diese im abgenommenen Zustand der Radlagereinheit 100 den Innenring 112 und damit auch den Rollenkranz 114 lagefixiert.

Figur 5 zeigt die Radlagereinheit 300 mit der Radnabe 304 und dem mittels des Außenrings 309 an der Radnabe 304 aufgenommenen Kegelrollenlager 305 mit dem Innenring 311 und dem Rollenkranz 313. Die axiale Lagesicherung des Innenrings 311 und des Rollenkranzes 313 erfolgt mittels des Sicherungsrings 327, der in diesem Ausführungsbeispiel als Wellring 333 mit einem in Form von radial nach innen und außen verlagerten Wellen 334, 335 ausgebildeten Wellenprofil vorgesehen ist. Hierbei greifen die Wellen 335 jeweils in eine bevorzugt als umlaufend vorgesehene, lediglich angedeutete Radialnut 328 ein, während die nach radial innen gerichteten Wellen 334 den Rollenkranz 313 und damit den Innenring 311 axial lagefixieren, da dieser entsprechend dem Innenring 211 der Figur 3 einen dem Ringbord 230 entsprechenden, nicht dargestellten Ringbord aufweist.

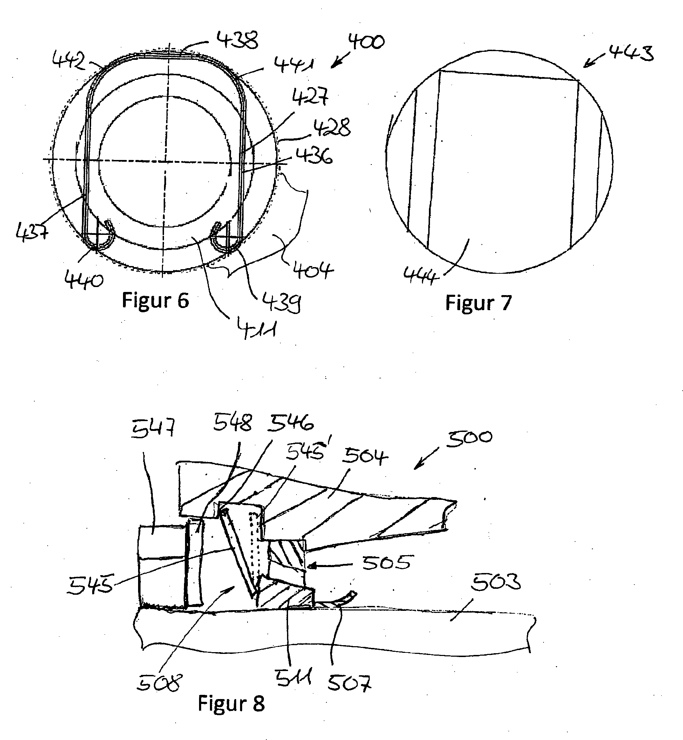

Figur 6 zeigt eine weitere Alternative der Radlagereinheit 400 mit dem Sicherungsring 427, der einseitig offen und U-förmig ausgebildet ist. Hierbei sind die beiden Schenkel 436, 437 mittels der Spange 438 verbunden, wobei die freien-hier aufgerollten Enden 439, 440 und die Ecken 441, 442 in der Radialnut 428 der lediglich angedeuteten Radnabe 404 eingeklinkt sind. Die mittleren Bereiche der Schenkel 436, 437 überstreichen den Innenring 411 und bilden damit die Lagesicherung für diesen.

Figur 7 zeigt unter Bezug auf Figur 6 schematisch die Unterlegscheibe 443 mit dem Ausschnitt 444, wodurch die Kontur dieser an den Sicherungsring 427 angepasst ist. Die Unterlegscheibe 443 kann zwischen dem Sicherungsring 427 und dem Innenring 411 angeordnet sein und erlaubt infolge des Ausschnitts 444 einen Zugriff der Zentralmutter zur Beaufschlagung des Innenrings 411 bei der Montage der Radlagereinheit auf dem Lagerzapfen.

Figur 8 zeigt einen Teilschnitt der Radlagereinheit 500 mit dem Kegelrollenlager 505. Das Sicherungsmittel 508 ist in dem dargestellten Ausführungsbeispiel als Federelement 545, beispielsweise als Tellerfeder ausgebildet , das zwischen dem Innenring 511 und dem Axialanschlag 546 der Radnabe 504 axial verspannt ist, so dass der Innenring 511 im nicht eingebauten Zustand der Radlagereinheit 500 lagefixiert und gegenüber der Hülse 507 axial verspannt ist, so dass die Hülse 507 in nicht eingebautem Zustand zwischen den beiden Innenringen zentriert bleibt. Bei einer Montage der Radlagereinheit 500 auf dem Lagerzapfen 503 wird die Zentralmutter 547 auf den Lagerzapfen geschraubt und damit das Federelement 545 - wie die gestrichelte Darstellung des Federelements 545' zeigt - vom Axialnaschlag 546 abgehoben, so dass im eingebauten Zustand der Radlagereinheit 500 die Vorspannung des Federelements 545 gegenüber dem Innenring 511 und dessen Kontakt zu dieser aufgehoben wird. Zwischen der Zentralmutter 547 und dem Federelement kann eine zusätzliche Unterlegscheibe 548 vorgesehen sein.

Es versteht sich, dass die in den Ausführungsbeispielen gezeigten Sicherungsmittel wie Sicherungsringe, Dichtungen und Federelemente in vorteilhafter Weise jeweils auch an den den dargestellten Kegelrollenlagern gegenüberliegenden Kegelrollenlagern eingesetzt werden können.

### Bezugszeichenliste

- 100: Radlagereinheit
- 101: Baueinheit
- 102: Drehachse
- 102a: Drehachse
- 102b: Drehachse
- 103: Lagerzapfen
- 104: Radnabe
- 105: Kegelrollenlager
- 106: Kegelrollenlager
- 107: Hülse
- 108: Sicherungsmittel
- 109: Außenring
- 110: Außenring
- 111: Innenring
- 112: Innenring
- 113: Rollenkranz
- 114: Rollenkranz
- 115: Lagerkäfig
- 116: Lagerkäfig
- 117: Kegelrolle
- 118: Kegelrolle
- 119: Stirnseite
- 120: Stirnseite
- 121: Axialanschlag
- 122: Axialanschlag
- 123: Stirnseite
- 124: Stirnseite
- 125: Axialanschlag
- 126: Sicherungsmittel
- 127: Sicherungsring
- 128: Radialnut
- 132: Dichtung
- 200: Radlagereinheit
- 204: Radnabe
- 209: Außenring
- 211: Innenring
- 213: Rollenkranz
- 217: Kegelrolle
- 227: Sicherungsring
- 228: Radialnut
- 229: Axialspalt
- 230: Ringbord
- 231: Ringbord
- 300: Radlagereinheit
- 304: Radnabe
- 305: Kegelrollenlager
- 309: Außenring
- 311: Innenring
- 313: Rollenkranz
- 327: Sicherungsring
- 328: Radialnut
- 333: Wellring
- 334: Welle
- 335: Welle
- 400: Radlagereinheit
- 404: Radnabe
- 411: Innenring
- 427: Sicherungsring
- 428: Radialnut
- 436: Schenkel
- 437: Schenkel
- 438: Spange
- 439: freies Ende
- 440: freies Ende
- 441: Ecke
- 442: Ecke
- 443: Unterlegscheibe
- 444: Ausschnitt
- 500: Radlagereinheit
- 503: Lagerzapfen
- 504: Radnabe
- 505: Kegelrollenlager
- 507: Hülse
- 508: Sicherungsmittel
- 511: Innenring
- 545: Federelement
- 545': Federelement
- 546: Axialanschlag
- 547: Zentralmutter
- 548: Unterlegscheibe

## Patentansprüche

1. Radlagereinheit (100, 200, 300, 400, 500) insbesondere für Nutzfahrzeuge mit einer auf einem Lagerzapfen (103, 503) verdrehbar mittels zwei axial voneinander beabstandeter Kegelrollenlager (105, 106, 505) mit jeweils einem Außenring (109, 110, 209, 309), einem Innenring (111, 112, 211, 311, 411, 511) und einem zwischen diesen angeordneten, aus Kegelrollen (117, 118, 217) und einem Lagerkäfig (115, 116) für diese gebildeten Rollenkranz (113, 114, 213, 313) gelagerten Radnabe (104, 204, 304, 404, 504), wobei die Kegelrollenlager (105, 106, 505) gegeneinander gerichtet mittels ihrer Außenringe (109, 209, 309) an jeweils einem Axialanschlag (121, 122) der Radnabe (104, 204, 304, 404, 504) aufgenommen sind und die Innenringe (111, 112, 211, 311, 411, 511) der Kegelrollenlager (105, 106, 505) axial voneinander mittels einer Hülse (107, 507) beabstandet sind, im nicht eingebauten Zustand der Radlagereinheit (100, 200, 300, 400, 500) Radnabe (104, 204, 304, 404, 504), Kegelrollenlager (105, 106, 505) und Hülse (107, 507) eine selbsthaltende Baueinheit (101) bilden, beide Kegelrollenlager (105, 106, 505) mittels jeweils eines direkt an der Radnabe (104, 204, 304, 404, 504) aufgenommenen, den Rollenkranz (113, 114, 213, 313) zumindest teilweise radial überdeckenden Sicherungsmittels (108, 508) axial gesichert sind und zumindest eines der beiden Sicherungsmittel (108) aus einem in einer Radialnut (128, 228, 328, 428) der Radnabe (104, 204, 305, 404) angeordneten Sicherungsring (127, 227, 327, 427) gebildet ist, **dadurch gekennzeichnet, dass** der Sicherungsring (327) ein Wellring (333) mit einem über den Umfang ausgebildeten Wellenprofil ist, dessen radial äußere Wellen (335) in die Radialnut (328) eingreifen und mittels radial innerer Wellen (334) der Rollenkranz (313) axial gesichert ist oder der Sicherungsring (427) im Wesentlichen U-förmig mit zwei mittels einer Spange (438) verbundenen Schenkeln (436, 437) ausgebildet ist, wobei freie Enden (439, 440) der Schenkel (436, 437) und Ecken (441, 442) zwischen den Schenkeln (436, 437) und die Spange (438) in der Radialnut (428) aufgenommen sind, der Rollenkranz oder der Innenring (411) mittels der Schenkel (436, 437) axial gesichert ist und zwischen dem Sicherungsring (427) und dem Kegelrollenlager eine im Wesentlichen U-förmig ausgenommene Unterlegscheibe (443) angeordnet ist oder zumindest ein Sicherungsmittel (508) als zwischen der Radnabe (504) und dem Rollenkranz oder Innenring (511) axial vorgespanntes Federelement (545) ausgebildet ist, dessen Vorspannung bei der Montage der Radlagereinheit (500) auf dem Lagerzapfen (503) aufgehoben wird.

2. Radlagereinheit (100, 400) nach Anspruch 1, **dadurch gekennzeichnet, dass** der Sicherungsring (127, 427) einen Axialanschlag für den Innenring (111, 411) bildet.

3. Radlagereinheit (200, 300) nach Anspruch 1 oder 2, **dadurch gekennzeichnet, dass** der Sicherungsring (227, 327) einen Axialanschlag für den Rollenkranz (213, 313) bildet und der Innenring (211, 311) mittels eines Ringbords (230) gegenüber dem Rollenkranz (213, 313) axial in Richtung des Sicherungsrings (227, 327) gesichert ist.

4. Radlagereinheit (100) nach einem der Ansprüche 1 bis 3, **dadurch gekennzeichnet, dass** zumindest eines der beiden Sicherungsmittel (126) aus einer zwischen der Radnabe (104) und dem Innenring (112) angeordneten, einen Axialanschlag für den Rollenkranz (114) bildenden Dichtung (132) gebildet ist.

## Claims

1. Wheel bearing unit (100, 200, 300, 400, 500), in particular for commercial vehicles, having a wheel hub (104, 204, 304, 404, 504) which is mounted rotatably on a bearing journal (103, 503) by means of two tapered roller bearings (105, 106, 505) which are spaced apart axially from one another with in each case one outer ring (109, 110, 209, 309), one inner ring (111, 112, 211, 311, 411, 511) and a roller crown ring (113, 114, 213, 313) which is arranged between them and is formed from tapered rollers (117, 118, 217) and a bearing cage (115, 116) for them, wherein the tapered roller bearings (105, 106, 505), directed against one another, are received by means of their outer rings (109, 209, 309) on in each case one axial stop (121, 122) of the wheel hub (104, 204, 304, 404, 504), and the inner rings (111, 112, 211, 311, 411, 511) of the tapered roller bearings (105, 106, 505) are spaced apart axially from one another by means of a sleeve (107, 507), the wheel hub (104, 204, 304, 404, 504), the tapered roller bearings (105, 106, 505) and the sleeve (107, 507) form one self-retaining structural unit (101) in the non-installed state of the wheel bearing unit (100, 200, 300, 400, 500), both tapered roller bearings (105, 106, 505) are secured axially by means of in each case one securing means (108, 508) which is received directly on the wheel hub (104, 204, 304, 404, 504) and radially covers the roller crown ring (113, 114, 213, 313) at least partially, and at least one of the two securing means (108) is formed from a securing ring (127, 227, 327, 427) which is arranged in a radial groove (128, 228, 328, 428) of the wheel hub (104, 204, 304, 404), **characterized in that** the securing ring (327) is a wave ring (333) with a wave profile which is configured over the circumference, the radially outer waves (335) of which engage into the radial groove (328), and the roller crown ring (313) is secured axially by means of radially inner waves (334) or the securing ring (427) is of substantially U-shaped configuration with two limbs (436, 437) which are connected by means of a clasp (438), wherein free ends (439, 440) of the limbs (436, 437) and corners (441, 442) between the limbs (436, 437) and the clasp (438) are received in the radial groove (428), the roller crown ring or the inner ring (411) is secured axially by means of the limbs (436, 437), and a washer (443) which is recessed in a substantially U-shaped manner is arranged between the securing ring (427) and the tapered roller bearing, or at least one securing means (508) is configured as a spring element (545) which is prestressed axially between the wheel hub (504) and the roller crown ring or inner ring (511), the prestress of which spring element (545) is cancelled during the mounting of the wheel bearing unit (500) on the bearing journal (503).

2. Wheel bearing unit (100, 400) according to Claim 1, **characterized in that** the securing ring (127, 427) forms an axial stop for the inner ring (111, 411).

3. Wheel bearing unit (200, 300) according to Claim 1 or 2, **characterized in that** the securing ring (227, 327) forms an axial stop for the roller crown ring (213, 313), and the inner ring (211, 311) is secured axially in the direction of the securing ring (227, 327) with respect to the roller crown ring (213, 313) by means of an annular rim (230).

4. Wheel bearing unit (100) according to one of Claims 1 to 3, **characterized in that** at least one of the two securing means (126) is formed from a seal (132) which is arranged between the wheel hub (104) and the inner ring (112) and forms an axial stop for the roller crown ring (114).

## Revendications

1. Unité de palier de roue (100, 200, 300, 400, 500) en particulier pour des véhicules utilitaires, comprenant un moyeu de roue (104, 204, 304, 404, 504) supporté sur un tourillon de palier (103, 503) de manière rotative au moyen de deux paliers à rouleaux coniques (105, 106, 505) espacés axialement l'un de l'autre, ayant à chaque fois une bague externe (109, 110, 209, 309), une bague interne (111, 112, 211, 311, 411, 511) et une couronne de rouleaux (113, 114, 213, 313) disposée entre celles-ci, formée de rouleaux coniques (117, 118, 217) et d'une cage de palier (115, 116) pour ceux-ci, les paliers à rouleaux coniques (105, 106, 505) étant reçus de manière orientée à l'opposé l'un de l'autre au moyen de leurs bagues externes (109, 209, 309) au niveau d'une butée axiale respective (121, 122) du moyeu de roue (104, 204, 304, 404, 504) et les bagues internes (111, 112, 211, 311, 411, 511) des paliers à rouleaux coniques (105, 106, 505) étant espacées axialement l'une de l'autre au moyen d'une douille (107, 507), dans l'état non installé de l'unité de palier de roue (100, 200, 300, 400, 500), le moyeu de roue (104, 204, 304, 404, 504), les paliers à rouleaux coniques (105, 106, 505) et la douille (107, 507) formant une unité structurelle autonome (101), les deux paliers à rouleaux coniques (105, 106, 505) étant fixés axialement au moyen d'un moyen de fixation respectif (108, 508) reçu directement sur le moyeu de roue (104, 204, 304, 404, 504), recouvrant radialement au moins partiellement la couronne de rouleaux (113, 114, 213, 313) et au moins l'un des deux moyens de fixation (108) étant formé d'une bague de fixation (127, 227, 327, 427) disposée dans une rainure radiale (128, 228, 328, 428) du moyeu de roue (104, 204, 304, 404), **caractérisée en ce que** la bague de fixation (327) est une bague ondulée (333) avec un profil ondulé réalisé sur la périphérie, dont les ondulations radialement externes (335) s'engagent dans la rainure radiale (328), et la couronne de rouleaux (313) est fixée axialement au moyen des ondulations radialement internes (334), ou la bague de fixation (427) est réalisée essentiellement en forme de U avec deux branches (436, 437) connectées au moyen d'une boucle (438), les extrémités libres (439, 440) des branches (436, 437) et les coins (441, 442) entre les branches (436, 437) et la boucle (438) étant reçus dans la rainure radiale (428), la couronne de rouleaux ou la bague interne (411) étant fixée axialement au moyen des branches (436, 437) et entre la bague de fixation (427) et le palier à rouleaux coniques étant disposée une rondelle (443) reçue essentiellement en forme de U, ou au moins un moyen de fixation (508) étant réalisé sous forme d'élément de ressort (545) précontraint axialement entre le moyeu de roue (504) et la couronne de rouleaux ou la bague interne (511), dont la précontrainte lors du montage de l'unité de palier de roue (500) sur le tourillon de palier (503) est supprimée.

2. Unité de palier de roue (100, 400) selon la revendication 1, **caractérisée en ce que** la bague de fixation (127, 427) forme une butée axiale pour la bague interne (111, 411).

3. Unité de palier de roue (200, 300) selon la revendication 1 ou 2, **caractérisée en ce que** la bague de fixation (227, 327) forme une butée axiale pour la couronne de rouleaux (213, 313) et la bague interne (211, 311) est fixée axialement dans la direction de la bague de fixation (227, 327) par rapport à la couronne de rouleaux (213, 313) au moyen d'un bord annulaire (230).

4. Unité de palier de roue (100) selon l'une quelconque des revendications 1 à 3, **caractérisée en ce qu'**au moins l'un des deux moyens de fixation (126) est formé d'un joint d'étanchéité (132) disposé entre le moyeu de roue (104) et la bague interne (112), formant une butée axiale pour la couronne de rouleaux (114).
